# EUROPEAN PATENT APPLICATION

(11) **EP 2 800 041 A1**
(43) Date of publication of application: **05.11.2014**
(21) Application number: 12863342.7
(22) Date of filing: 27.12.2012
(51) Int. Cl.: G06Q 20/20, G06K 7/10, G06Q 20/06

(54) **SYSTEM AND METHOD FOR PAYING**

(30) Priority: 30.12.2011 US 201161581849 P
(71) Applicant: SK C&C Co., Ltd., Seongnam-si, Gyeonggi-do 463-844 (KR)
(72) Inventor: HONG, Jun S., Atlanta Georgia 30326 (US); KWON, Yong Sung, Alpharetta Georgia 30004 (US)
(74) Representative: Walaski, Jan Filip
(86) International application number: PCT/KR2012/011585
(87) International publication number: WO 2013/100637

(57) **Abstract**

A system and method for payment is provided. According to the method for payment, a mobile terminal carried by a customer reads goods for purchase and calculates an amount due for the read goods. Accordingly, customers can save a waiting time for payment and merchants can reduce operating costs.

## Description

### Technical Field

The present invention relates to a system and method for purchasing goods using a mobile terminal with a Near Field Communication (NFC) function.

### Background Art

Conventionally, a variety of merchandises or goods may be purchased at a retailer by identifying goods for purchase by referencing a paper shopping list, selecting goods for purchase, taking goods to a place where a point of sale (POS) system is manned by a cashier, having goods scanned by the cashier, and by providing payment via traditional payment methods, including cash, checks, credit cards, debit cards and gift cards.

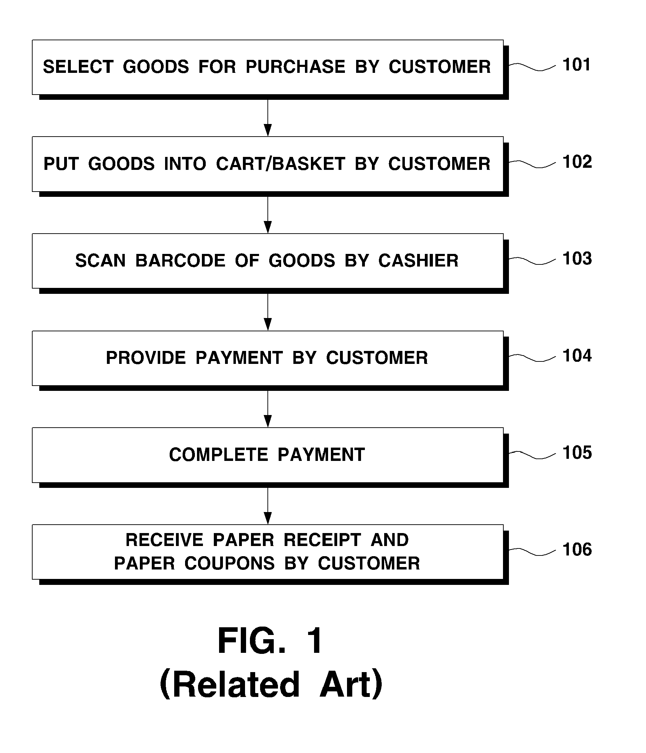

During this process, a customer may use coupons and/or reward points to redeem additional benefits associated with the respective items. Upon a completion of a payment, a paper receipt may be provided to the customer for the record of the purchase transaction. A more detailed description of a conventional shopping process is described below with reference to FIG. 1.

FIG. 1 is a flowchart illustrating a conventional method for purchasing goods at a retailer.

In operation 101, a customer may enter a retailer or a merchant's place of business and select one or more goods for purchase. The customer may have a list of goods along with quantities for purchase on a paper shopping list. In operation 102, the customer puts the selected goods into a cart or a basket. As the selected goods are put into the cart or basket, the customer may delist the selected item from the shopping list. Once the customer has completed his or her selection of goods for purchase, the customer may proceed to a POS terminal to be placed in queue until a cashier is ready to service the customer with his or her purchase.

In operation 103, once customer is ready to be serviced, the cashier scans the selected goods using bar codes that are provided on the selected goods. In this case, the customer may redeem the benefit via the reward card or membership card. However, when the customer forgets to provide the reward card or membership card or information thereof, any benefit such as an additional discount may not be realized for that particular purchase. In addition, any coupons that may be applicable to goods selected for purchase may be presented to the cashier for redemption at the time of purchase. However, when the customer does not provide such coupons at the time of purchase, coupons may not be redeemed for that purchase.

In operation 104, once a total amount due is provided to the customer, the customer may respond with proper payment (e.g., credit card, debit card, or cash). However, when the customer underestimated the total prior to providing payment, the customer may return one or more goods to lower the total amount due.

In operation 105, when the customer finalizes the payment transaction, the customer receives a paper receipt and additional coupon offerings in operation 106.

The conventional method of shopping for goods may be inefficient or time consuming in that the customer may face wait times to interact with a cashier and hand scan each items selected for purchase. In addition, the customer may have inconvenience of having to manage applicable reward points, membership and/or incentives (e.g., coupons and gift cards).

### Disclosure

### Technical Problem

An aspect of the present invention is to solve at least the above-mentioned problems and/or disadvantages and to provide at least the advantages described below. Accordingly, an aspect of the present invention is to provide a method and system for payment, which can allow a customer to read goods for purchase via a customer's mobile terminal and calculate an amount due.

Another aspect of the present invention is to provide a method and system for payment, which can provide mobile payment or remote payment for the calculated amount due via payment means stored in a Secure Element (SE) of a mobile terminal.

### Technical Solution

Exemplary embodiments of the present invention provide a system and method for purchasing goods by using a mobile terminal.

According to an aspect of an exemplary embodiment, there is provided a method for payment including: scanning of goods with a mobile terminal; storing information related to goods in the mobile terminal; transmitting information related to goods to a point-of-sale (POS) terminal for purchase; transmitting payment information with the mobile terminal; and receiving a receipt by the mobile terminal.

According to an aspect of another exemplary embodiment, there is provided a method for providing remote payment including: scanning goods with a mobile terminal; storing information related to goods in the mobile terminal; transmitting information related to goods to a Trusted Service Manager (TSM) system; reading payment credential information from a Secure Element (SE) of the mobile terminal, transmitting the payment credential information to the TSM system; and receiving a receipt a financial transaction performed.

According to an aspect of another exemplary embodiment, there is provided a mobile terminal to provide payment including: a product reader to identify and receive information of goods, a Near Field Communication (NFC) transmitter/receiver to transmit and receive information to a POS terminal, a memory to store information related to goods for purchase; and an SE to store payment information.

It is to be understood that both the foregoing general description and the following detailed description are exemplary and explanatory and are intended to provide further explanation of the invention as claimed. Other features and aspects will be apparent from the following detailed description, the drawings, and the claims.

According to an aspect of another exemplary embodiment, there is provided a method for payment, the method including: reading, by a mobile terminal carried by a customer, goods for purchase; and calculating, by the mobile terminal, an amount due for read goods.

The reading may include reading goods for purchase by scanning a barcode or a tag of goods for purchase with a reader provided in the mobile terminal.

The calculating may include: identifying, by the mobile terminal, coupons applicable for the read goods from among stored coupons; and, after applying the identified coupons, calculating the amount due for the read goods.

The method may further include: generating, by the mobile terminal, an electronic shopping list in which goods for purchase are listed; and delisting the read goods from the electronic shopping list.

The method may further include providing, by the mobile terminal, payment information stored in a SE as a mean for paying the amount due.

The providing may include providing the payment information to a POS system of a merchant's store, a TSM, or a financial institution.

The providing may further include, when the payment information is provided to the TSM or the financial institution, transmitting location information to be used for authentication, and, when the location information indicates a specific area of the merchant's store, the authentication may succeed.

The method may further include receiving, by the mobile terminal, a digital receipt of a transaction completed based on the payment information.

The method may further include, when the calculated amount due is over a budget, generating, by the mobile terminal, a warning.

The method may further include, when the warning is generated, suggesting, by the mobile terminal, alternative goods of a same kind.

According to an aspect of another exemplary embodiment, there is provided a mobile terminal including: a reader configured to read goods to be purchased by a customer; and a processor configured to calculate an amount due for goods read by the reader.

According to an aspect of another exemplary embodiment, there is provided a TSM system including: a communication interface configured to communicate with a mobile terminal carried by a customer and a financial institution; and a processor configured to perform a payment procedure with the financial institution connected via the communication interface by using payment information which is received from the mobile terminal via the communication interface, and wherein an amount due included in the payment information is calculated by the mobile terminal reading goods to be purchased by the customer.

### Advantageous Effects

As described above, according to various exemplary embodiments of the present invention, a customer can read goods to purchase via a mobile terminal of the customer and calculate the amount due, so that a waiting time for payment can be reduced. In addition, since it is possible to provide mobile payment or remote payment via a payment means stored in an SE of a mobile terminal, the customer can save a time during a payment process and merchants can reduce operating costs.

In addition, since coupons stored in a mobile terminal are automatically identified and applied, the customer can easily use the coupons without checking the coupons one by one.

In addition, since an electronic shopping list provided on a mobile terminal is substituted for a paper shopping list, it is easy for customers to manage goods for purchase during a shopping process and the customer can check an estimated amount due on a real time basis.

In addition, when the estimated amount due is over a budget, a warning is generated by the mobile terminal and thus rational consumption can be promoted.

### Description of Drawings

FIG. 1 is a flowchart illustrating a conventional method for purchasing goods at a retailer;
FIG. 2 is a flowchart illustrating a method for payment according to an exemplary embodiment of the present invention;
FIG. 3 is a flowchart illustrating a method for providing remote payment according to an exemplary embodiment of the present invention;
FIG. 4 is a block diagram illustrating a mobile terminal according to an exemplary embodiment of the present invention;
FIG. 5 is a view illustrating a method for scanning goods for purchase according to an exemplary embodiment of the present invention;
FIG. 6 is a view illustrating a financial transaction for completing a purchase of goods according to an exemplary embodiment of the present invention;
FIG. 7 is a view illustrating a method for payment for goods according to an exemplary embodiment of the present invention; and
FIG. 8 is a block diagram illustrating a TSM system according to an exemplary embodiment of the present invention.

### Best Mode

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art.

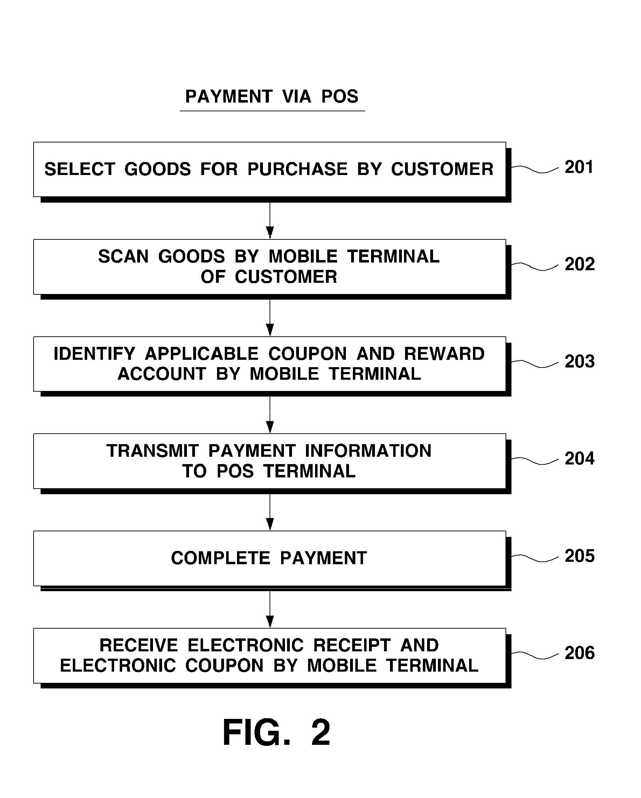

FIG. 2 is a flowchart illustrating a method for providing payment according to an exemplary embodiment of the present invention.

In operation 201, a customer selects goods to purchase. Goods may be selected according to an electronic shopping list provided on a mobile terminal used by the customer.

In operation 202, the customer scans goods using a mobile terminal. The mobile terminal may be equipped with a barcode reading application, which may be obtained beforehand or received at the merchant's premises. In addition, the mobile terminal may be equipped with a Near Field Communication (NFC) function to read NFC tags of goods for purchase. Applications that may aid in reading barcodes and/or NFC tags may be provided at the merchant premises through a Wireless Fidelity (Wi-Fi) service or may be obtained at a third party or merchant's website using a wireless or mobile communication networks.

The mobile terminal may include, without limitation, a cell phone, a Personal Digital Assistant (PDA), and a handheld computing device. In addition, the mobile terminal may include a Secure Element (SE) to store payment information, purchase history, and personal preferences. In an example, when the mobile terminal receives a value added service, such as an electronic coupon or an electronic gift card, the received service may be stored in the SE (or an internal memory) of the mobile terminal.

When goods are scanned, quantity of selected goods and a category to which goods belong (e.g., condiments, meats, drinks, alcohol, and etc.) may be tracked using the electronic shopping list. Also, when goods are scanned, the corresponding item may be delisted from the electronic shopping list, leaving the items left to be purchased. A running total including applicable taxes and applied discounts may also be displayed to the user to keep track of the amount of money that is being spent.

In addition, based on scanned goods, incentives may be provided to the customer. For example, the incentives may include coupons and special offers related to selected and/or related goods. In operation 203, the mobile terminal checks to determine whether any applicable coupons and reward accounts are applicable for scanned goods and/or retailer the customer is shopping at. In an example, when the customer scans a bottle of mustard for purchase, the customer may receive at least one of a notification of a competing brand of mustard that is on sale, a notification informing the customer of an existing coupon that may be applied to a different brand of mustard, or a notification that the currently scanned mustard is on sale. In addition, a notification of related items that are on sale may also be provided as an additional benefit.

In addition, when a reward account is determined to be applicable at the current retailer the customer is shopping at, the reward account may automatically be applied. For example, the reward account may be applied at the POS system, during scanning of goods, at the time of entry into the premises, or during a payment process. Alternatively, the reward account may also be applied manually.

Once the customer has completed shopping, the customer may provide payment information for paying for selected goods to complete the purchase transaction in operation 204.

The customer may also provide payment information by using a payment applet stored in the SE of the mobile terminal. The mobile terminal, which is equipped with an NFC function and includes a payment applet, may make payment at a corresponding point-of-sale (POS) terminal. More specifically, the customer may hold up the mobile terminal storing shopping data to the POS terminal with a NFC reader, which in response may read the list of items that were scanned for purchase and the amount due, as well as any coupons, promotions, and any associated reward accounts. The customer may verify the amount that is due and select a payment applet to complete the purchase transaction.

In operation 205, the POS terminal which has received the payment information from the mobile terminal may interact with a financial institution to request payment, and may request a payment approval. When the payment is approved by the financial institution, an approval response may be transmitted to the POS terminal.

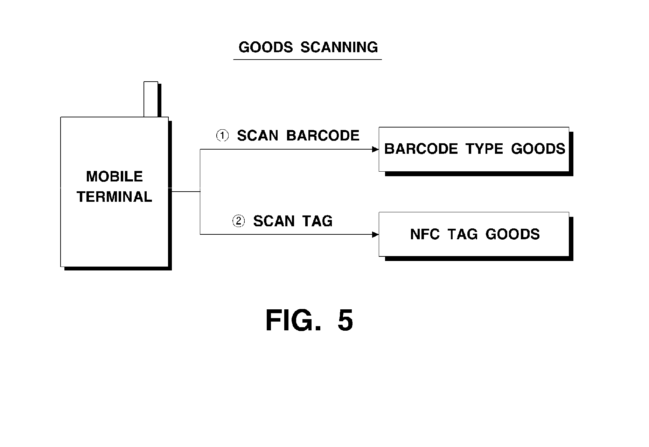

In operation 206, the POS terminal may transmit an electronic receipt of the transaction to the mobile terminal to complete the payment process. In addition, electronic coupons, reward points, and/or promotional items may be transmitted to the mobile terminal for future use. Since the various incentives may be stored in the mobile terminal, these items may be automatically applied during a subsequent purchase transaction. A more detailed description of the transaction with the POS terminal is provided below with reference to FIG. 5.

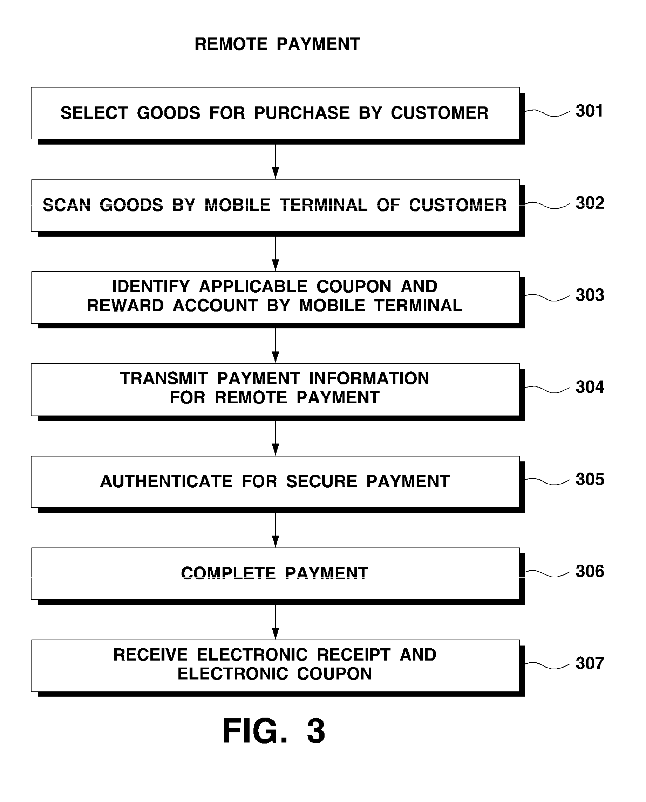

Alternatively, the customer may opt to provide payment information remotely rather than waiting in queue to interact with the POS terminal. Specifically, when the customer has completed shopping, the customer may initiate remote payment using the mobile terminal. A more detailed description of performing a remote payment is provided below with reference to FIG. 3.

FIG. 3 is a flowchart illustrating a method for providing remote payment according to an exemplary embodiment of the invention.

In operation 301, a customer selects goods to purchase. Goods may be selected according to an electronic shopping list provided on a mobile terminal owned by the customer.

In operation 302, the customer scans goods using the mobile terminal. The mobile terminal may be equipped with a barcode reading application, which may be obtained beforehand or received at the merchant's premises. In addition, the mobile terminal may be equipped with a NFC function to read NFC tags that may be associated with selected goods for purchase. Applications that may aid in reading barcodes and/or NFC tags may be provided at the merchant premises through a Wi-Fi service or may be obtained at a third party or merchant's website using a wireless or mobile communication networks.

When goods are scanned, quantity of selected goods and the category to which goods belong may be tracked using the electronic shopping list. In addition, when goods are scanned, the corresponding item may be delisted from the electronic shopping list, leaving with items left to be purchased. A running total including applicable taxes and applied discounts may also be displayed to the user to keep track of the amount of money that is being spent.

When the mobile terminal is associated with a personal finance application, the mobile terminal may warn the customer when the customer goes over a certain amount of budget. In addition, the customer may set a budget him or herself prior to shopping without such an application. When the running total is determined to be over budget, the mobile terminal may notify the customer of cheaper alternatives that may be available to lower the total amount due.

In addition, based on scanned goods, incentives may be provided to the customer, which may include coupons and special offers related to the selected and/or related goods. In operation 303, the mobile terminal checks to determine whether any applicable coupons and reward accounts are applicable for scanned goods and/or retailer the customer is shopping at. For example, when the customer scans a bottle of mustard for purchase, the customer may receive at least one of a notification of a competing brand of mustard that is on sale, a notification informing the customer of an existing coupon that may be applied to a different brand of mustard, or a notification that the currently scanned mustard is on sale. In addition, a notification of related items that are on sale may also be provided as an additional benefit.

Once the customer has completed shopping, the customer may transmit payment information for paying for selected goods to complete the purchase transaction in operation 304. More specifically, the payment information may be transmitted remotely using a mobile communication network or a wireless internet connection, which may be provided by the merchant or the retailer. In addition, the payment information for financial process may be stored in an SE of the mobile terminal. The payment information may include, without limitation, a total amount due, list of items for purchase, merchant, and method of payment. The remote payment transaction request may be transmitted to a financial institution via a Trusted Service Manager (TSM) system or a third party server, or directly to the financial institution.

In operation 305, credential information is verified to authenticate during the payment process. For example, credential information for payment processing may include at least one of information related to the mobile terminal, information related to the SE, account information associated with the payment method, a geographic location of the transmission location, a security code (e.g., Personal Identification Number (PIN)), and an expiration date of a payment form.

In operation 306, when the credential information is successfully authenticated, the financial institution approves the financial transaction and transmits the approval to the mobile terminal, the TSM system facilitating the financial transaction, or a third party server.

In operation 307, a digital receipt and/or additional services are transmitted to the mobile terminal. When the approval is transmitted to the TSM or third party server, a digital copy of the transaction may be recorded in the TSM or the third party server and the TSM or the third party server may transmit the copy of the transaction and/or additional services to the mobile terminal. In addition, the financial institution may also transmit the approval of the financial transaction to a POS terminal at the retailer or merchant's place of business. The POS terminal may then generate a digital receipt of the transaction for record keeping.

In the above-described exemplary embodiment, to facilitate a uniform location for payment to be used as credential information, the retailer may designate/restrict a specific area of the premises to conduct remote payment.

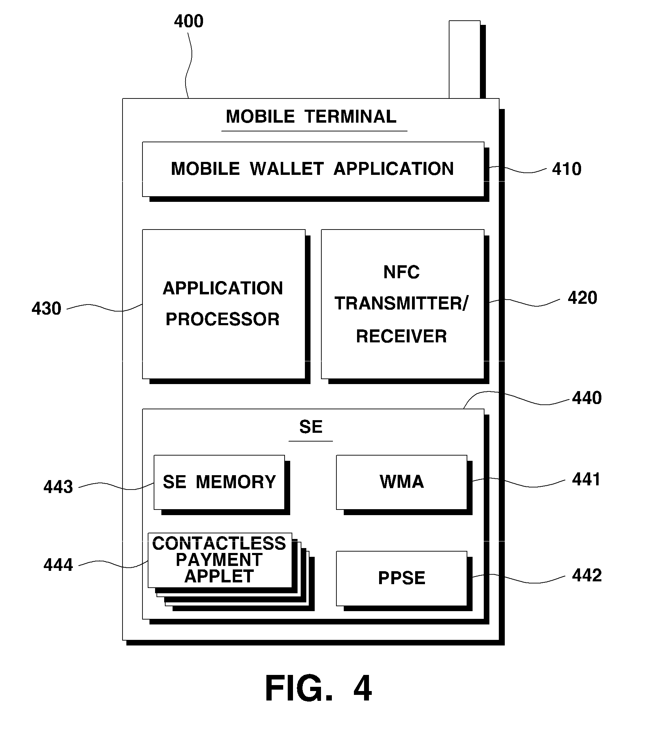

FIG. 4 is a block diagram illustrating a mobile terminal according to an exemplary embodiment of the present invention.

As shown in FIG. 4, the mobile terminal 400 includes a mobile wallet application 410, an NFC transmitter/receiver 420, an application processor 430, and an SE 440. The SE 440 may include a Wallet Management Applet (WMA) 441, a Payment Procedure Secure Elements (PPSE) 442, an SE memory 443, and a contactless payment applet 444.

The mobile wallet application 410 may include one or more widgets, which may refer to various forms of payment, a gift card, a coupon, a reward card membership, and a transportation pass. In addition, the mobile wallet application 410 may provide an interface to a user of the mobile terminal to view, select, and/or manipulate the information stored therein.

The NFC transmitter/receiver 420 may allow information to be transmitted from the mobile terminal to a corresponding NFC terminal (e.g., a POS terminal equipped with a NFC reader). NFC technology allows data exchange between two terminals in proximity to each other. Accordingly, payment information and other data may be exchanged using NFC technology.

The application processor 430 may execute applications according to a request received from an external device. For example, when the mobile terminal 400 equipped with the NFC transmitter/receiver 420 is waved in front of a POS terminal equipped with a NFC reader, and the POS terminal transmits a request signal to the mobile terminal 400 via the NFC transmitter/receiver 420 to activate the mobile wallet application 410 to begin the payment process, the application processor 430 may execute the mobile wallet application 410.

The WMA 441 may refer to a software application that resides within the SE 440 to manage the contactless payment applet 444, which may be normally inaccessible by the user. During a financial transaction, the mobile terminal 400 may transmit information related to the contactless payment applet 444 to the POS terminal in order to complete a purchase transaction. The PPSE 442 may store an application ID and a label of the contactless payment applet 444 stored in the SE.

FIG. 5 is a view illustrating a method for reading goods for purchase according to an exemplary embodiment of the present invention.

As described above, the customer may read goods for purchase by scanning a barcode attached to goods as illustrated in option 1 or may read goods for purchase by scanning an NFC tag of goods as illustrated in option 2.

As described above, the barcode may be scanned and read with a general barcode reading application that may be stored in the mobile terminal, or may be scanned and read with a barcode application that may be specifically catered to the merchant. The barcode application catered to the merchant may be procured by the customer at the merchant's store, merchant's website, or via other available methods.

In addition, goods selected for purchase may be read by scanning NFC tags of goods. When the mobile terminal is equipped with an NFC transmitter/receiver, the NFC tag may be read by placing the mobile terminal within close proximity to the NFC tag.

Once the barcode or the NFC tag is scanned or read, goods may be stored on the electronic shopping list. More specifically, the list of items on the shopping list may include a list of goods which have been selected for purpose and a list of goods not selected for purchase. The scanning result from the barcode or the NFC tag is reflected in both of the lists of goods.

The electronic shopping list may provide a description of goods that were selected, quantity, and price. A running tally of the total amount due may be displayed to the user as well. In addition, when goods are read, stored coupons that may be applied to selected goods are identified and displayed along with an adjusted price. In addition, a notification of competing items, alternative items, or complementary items that may be on sale may be provided to the customer.

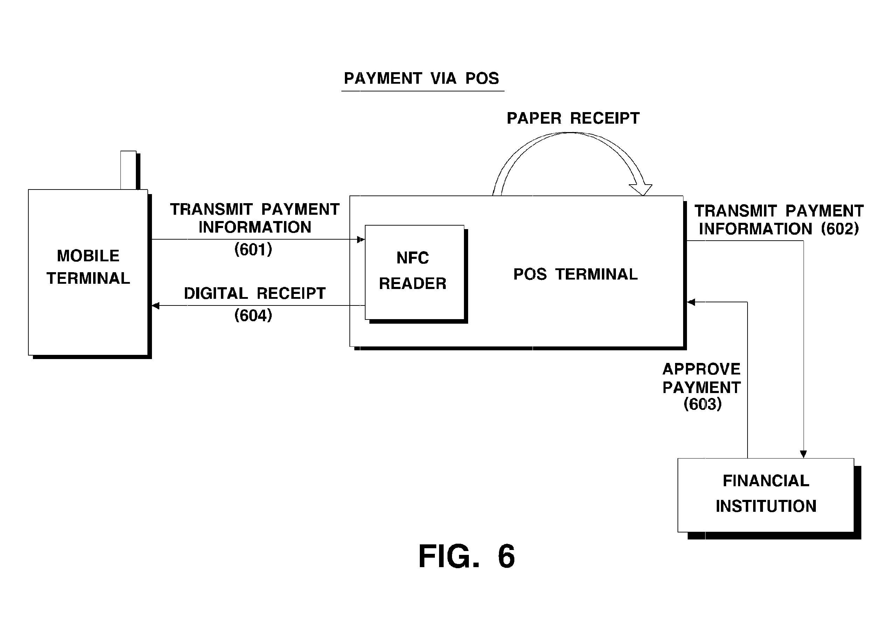

FIG. 6 is a view illustrating a financial transaction for completing a purchase of goods according to an exemplary embodiment of the present invention.

In operation 601, the customer selects a contactless payment applet (e.g., Visa® credit card, MasterCard@ credit card, bank debit card, and gift card) on the mobile terminal to transmit a payment request to the POS terminal. The payment request may be made by placing the mobile terminal near an NFC reader of the POS terminal so that encrypted payment information stored in the contactless payment applet is transmitted using NFC technology.

In operation 602, the POS terminal transmits a financial transaction request to a financial institution along with the payment information for approval of payment request submitted by the mobile terminal. In operation 603, the financial institution returns a payment approval to the POS terminal in response to the payment request. When the request for payment is approved, the POS terminal transmits an electronic receipt to the mobile terminal in operation 604. In addition, a paper receipt may also be optionally provided in operation 605. Electronic coupons based on the items purchased, quantities purchased, and/or based on other historical shopping data may also be transmitted to the mobile terminal for future use.

The POS terminal may refer to hardware and software used to handle financial transactions associated with goods for purchase by customers. The POS terminal may manage the selling process by a salesperson accessible interface, or by an automated customer accessible interface. The POS terminal may further include a weight scale, an integrated credit card processing system, a signature capture device, a customer pin pad device, as well as an NFC reader to receive and transmit Radio Frequency (RF) signals to an NFC enabled terminal.

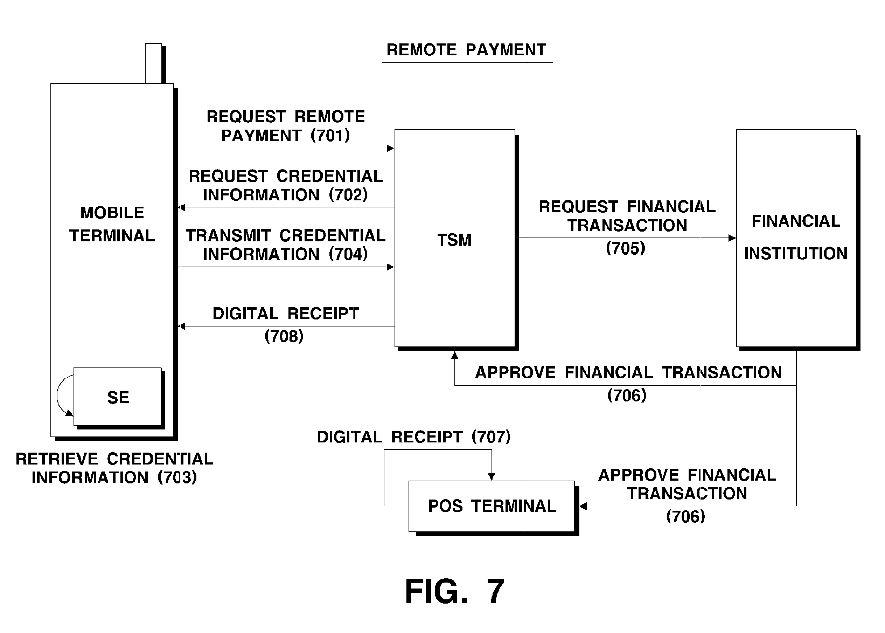

FIG. 7 is a view illustrating a financial transaction for completing a purchase of goods according to an exemplary embodiment of the present invention.

The customer may opt to provide payment remotely rather than waiting in queue to provide payment to a cashier or the POS terminal for selected goods. To provide for remote payment capability, a Trusted Service Manager (TSM) system may serve as an intermediary to facilitate transactions between the mobile terminal and the financial institution.

In operation 701, the mobile terminal submits a remote payment request to the TSM system. While FIG. 7 illustrates the payment information being transmitted to the TSM system, other alternatives are possible. For example, the payment information may be transmitted directly to a financial institution (e.g., a credit card company, and bank) or may be transmitted to a financial institution via a third party server.

In operation 702, the TSM system requests credential information from the mobile terminal to validate the transmitted payment information, the mobile terminal, and the customer who is transmitting the payment information. The mobile terminal may retrieve credential information from the SE in operation 703 and transmit the credential information to the TSM in operation 704. For example, credential information may include at least one of SE information (Card Production Life Cycle (CPLC), Card Serial Number (CSN), Card Image Number (CIN), Integrated Circuit Card Identification (ICCID)), and information related to the mobile terminal or mobile equipment (International Mobile Equipment Identity (IMEI)/Mobile Equipment Identifier (MEID), Mobile Subscriber Integrated Services Digital Network Number (MSISDN)).

In operation 705, after the received credential information is authenticated and approved, the TSM system transmits the request for financial transaction to the financial institution on behalf of the mobile terminal. In operation 706, the financial institution may perform its own authentication processes and transmit an approval of the requested financial transaction. In addition, in operation 706, the financial institution may transmit the financial transaction approval to a POS terminal.

In operation 707, the POS terminal receives the financial transaction approval and creates a receipt of the financial transaction to be stored in the POS terminal. In operation 708, the TSM system receives the approval of the financial transaction and transmits a digital receipt of the financial transaction to the mobile terminal. In addition, one or more incentives or coupons may also be transmitted for future use, which may be based on current purchase and/or history of the customer's purchase. A copy of the receipt may also be stored in the TSM system as well.

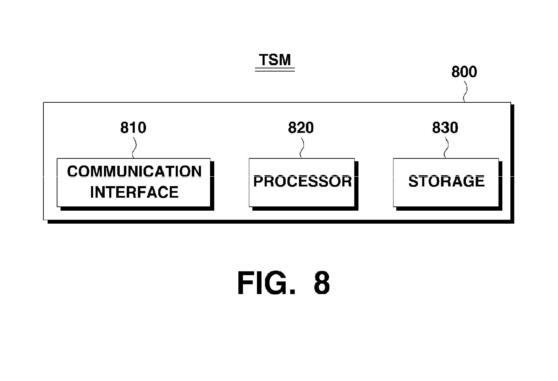

FIG. 8 is a block diagram of a TSM system according to an exemplary embodiment of the present invention. As shown in FIG. 8, the TSM system 800 according to an exemplary embodiment of the present invention includes a communication interface 810, a processor 820, and a storage 830.

The communication interface 810 is a means for communicating with a mobile terminal carried by a customer and a financial institution.

The processor 820 receives payment information from the mobile terminal via the communication interface 810, and performs a payment procedure with the financial institution connected via the communication interface 810 by using the payment information. Prior to processing the payment, the processor 820 may request credential information from the mobile terminal and may perform a authentication procedure.

When the payment procedure is completed, the processor 820 may transmit a digital receipt to the mobile terminal via the communication interface 810.

The storage 830 is a storage medium in which programs and data necessary for communication, payment process, and authentication procedure of the processor 830.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A method for payment, the method comprising:
reading, by a mobile terminal carried by a customer, goods for purchase; and
calculating, by the mobile terminal, the amount due for read goods for purchase.

2. The method of claim 1, wherein the reading comprises reading a good for purchase by scanning a barcode or a tag of the good for purchase with a reader provided in the mobile terminal.

3. The method of claim 1, wherein the calculating comprises:
identifying, by the mobile terminal, coupons applicable for read goods from among stored coupons; and
after applying the identified coupons, calculating the amount due for read goods.

4. The method of claim 1, further comprising:
generating, by the mobile terminal, an electronic shopping list in which goods for purchase are listed; and
delisting the read goods from the electronic shopping list.

5. The method of claim 1, further comprising providing, by the mobile terminal, payment information stored in a SE as means for paying the amount due.

6. The method of claim 5, wherein the providing comprises providing the payment information to a POS system of a merchant's store, a TSM, or a financial institution.

7. The method of claim 6, wherein the providing further comprises, when the payment information is provided to the TSM or the financial institution, transmitting location information to be used for authentication, and
wherein, when the location information indicates a specific area of the merchant's store, the authentication succeeds.

8. The method of claim 5, further comprising receiving, by the mobile terminal, a digital receipt of a transaction completed based on the payment information.

9. The method of claim 1, further comprising, when the calculated amount due is over a budget, generating, by the mobile terminal, a warning.

10. The method of claim 9, further comprising, when the warning is generated, suggesting, by the mobile terminal, alternative goods of a same kind.

11. A mobile terminal comprising:
a reader configured to read goods to be purchased by a customer; and
a processor configured to calculate the amount due for goods read by the reader.

12. A TSM system comprising:
a communication interface configured to communicate with a mobile terminal carried by a customer and a financial institution; and
a processor configured to perform a payment procedure with the financial institution connected via the communication interface by using payment information which is received from the mobile terminal via the communication interface, and
wherein the amount due included in the payment information is calculated by the mobile terminal reading goods to be purchased by the customer.
